# EUROPÄISCHE PATENTSCHRIFT

(11) **EP 3 792 461 B1**
(45) Veröffentlichungstag und Bekanntmachung des Hinweises auf die Patenterteilung: **10.04.2024**
(21) Anmeldenummer: 20192332.3
(22) Anmeldetag: 24.08.2020
(51) Int. Cl.: F01N 3/20, F01N 3/30

(54) **BEHEIZTE EINSPRITZDÜSE**
HEATED INJECTION NOZZLE
BUSE D'INJECTION CHAUFFÉE

(30) Priorität: 16.09.2019 DE 102019006499
(43) Veröffentlichungstag der Anmeldung: 17.03.2021
(73) Patentinhaber: Albonair GmbH, 44263 Dortmund (DE)
(72) Erfinder: Raad, Mustafa, 57319 Bad Berleburg (DE); Kassel, Armin, 58119 Hagen (DE)
(74) Vertreter: Patentanwaltskanzlei Methling

(56) Entgegenhaltungen:
- EP-A1- 1 008 732
- DE-A1-102005 044 780
- DE-A1-102016 107 213
- US-A1- 2004 098 979

## Beschreibung

Die Erfindung betrifft eine Einspritzdüse zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse einen Außenkörper, einen in dem Außenkörper angeordneten Innenkörper und einen Düsenkopf umfasst, wobei der Außenkörper einen Reduktionsmitteleinlass aufweist.

Derartige Düsen sind aus dem Stand der Technik bekannt. Nachteilig ist dabei, dass der Aufbau zur Beheizung der Düse komplex ist und sehr viel Bauraum einnimmt.

Ferner betrifft die Erfindung ein Reduktionsmitteldosiersystem zur Einspritzung eines Reduktionsmittels in den Abgasstrom eines Verbrennungsmotors zur selektiven katalytischen Reduktion, mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird.

Aus der EP 1 008 732 A1 ist eine Vorrichtung und ein Verfahren zum Nachbehandeln von Abgasen einer mit Luftüberschuss arbeitenden Brennkraftmaschine bekannt, wobei durch Umfassen des in der Dosiereinrichtung enthaltenen Einspritzventils mittels eines unmittelbar mit der Abgasleitung verbundenen, doppelwandigen Ventilaufnahmekörpers es ermöglicht wird, Druckluft in einen Luftspalt zwischen einer Außenwandung und einer Innenwandung des Ventilaufnahmekörpers einzublasen und dadurch zumindest die abgasnahen Teile des Einspritzventils zu kühlen.

Aus der DE 10 2005 044 780 A1 ist eine Einspritzdüse bekannt, insbesondere zur Einbringung eines oxidierbaren Fluids in eine Abgasanlage stromaufwärts eines Katalysators oder Filters, mit einem Heizelement und einem Wärmespeicher, der von dem Heizelement aufgeheizt wird und die gespeicherte Wärme an das Fluid abgeben kann.

Auch aus der US 2004/098979 A1 ist Einspritzdüse zur Einspritzung eines Reduktionsmittels in den Abgasstrom eines Verbrennungsmotors bekannt mit einem innenliegenden, elektrischen Heizelement.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Die Begriffe Reduktionsmitteldosiersystem bzw. Dosiersystem werden im Sinne der Erfindung synonym verwendet. Die Begriffe Düse und Einspritzdüse werden ebenfalls synonym verwendet.

Bei den bekannten Reduktionsmitteldosiersystemen zur Einspritzung eines Reduktionsmittels in den Abgasstrom eines Verbrennungsmotors zur selektiven katalytischen Reduktion können sich die relativ niedrigen Temperaturen der Abgase z. B. bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. Die Aufbereitung unterteilt sich somit in die folgenden beiden Reaktionsschritte:

Thermolyse (NH₂)₂CO → NH₃ + HNCO

Hydrolyse HNCO + H₂O → NH₃ + CO₂

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relativ niedrige Temperaturen, wie sie beispielsweise beim Kaltstart des Verbrennungsmotors vorliegen, können den Ablauf dieser Reaktionen verlangsamen.

Die Aufgabe der Erfindung ist es daher, eine Einspritzdüse für ein Reduktionsmitteldosiersystem derart weiterzubilden, dass die Funktionsweise eines SCR-Katalysators, insbesondere bei niedrigen Temperaturen wie sie beispielsweise bei einem Kaltstart eines Verbrennungsmotors vorkommen, d.h. insbesondere bevor die Betriebstemperatur des Verbrennungsmotors erreicht ist, verbessert wird.

Diese Aufgabe wird erfindungsgemäß durch eine Einspritzdüse gemäß Anspruch 1 und ein Reduktionsmitteldosiersystem gemäß Anspruch 12 gelöst. Vorteilhafte Weiterbildungen der Erfindung sind in den abhängigen Ansprüchen angegeben.

Erfindungsgemäß bei einer Einspritzdüse zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse einen Außenkörper, einen in dem Außenkörper angeordneten Innenkörper und einen Düsenkopf umfasst, wobei der Außenkörper einen Reduktionsmitteleinlass aufweist, ist es, dass zwischen dem Außenkörper und dem Innenkörper eine Reduktionsmittelkammer ausgebildet ist, wobei der Innenkörper zumindest ein Heizelement aufweist oder als Heizelement ausgebildet ist.

Dabei mündet der Reduktionsmitteleinlass mittelbar oder unmittelbar in die Reduktionsmittelkammer. Die Reduktionsmittelkammer wiederum mündet mittelbar oder unmittelbar in den Düsenkopf.

Durch die Anordnung des Heizelementes innerhalb der Düse wird eine Erwärmung des Reduktionsmittels während des Transports des Reduktionsmittels durch die beheizte Düse im Inneren der Düse ermöglicht. Ferner wird dadurch eine kompakte Bauweise ermöglicht, da auf weitere Beheizungselemente verzichtet werden kann.

Ferner wird durch eine derartige Anordnung eine einfache Montage in einen Gesamtaufbau eines Reduktionsmitteldosiersystems ermöglicht, da die Beheizungsfunktion bereits in der Düse integriert ist.

Dadurch, dass der Innenkörper zumindest ein Heizelement aufweist oder als Heizelement ausgebildet ist, findet die Erwärmung im Inneren der Düse statt, sodass Wärmeverluste zur Umgebung der Düse minimiert werden. Ferner kann der Außenkörper weitere Mittel zur thermischen Isolation gegenüber der Umgebung aufweisen.

Das Heizelement kann dabei zur Erwärmung bis hin zu einer Verdampfung des Reduktionsmittels eingesetzt werden. Hierdurch wird die Aerosolbildung und die Sprayqualität des Reduktionsmittels verbessert und insbesondere die Tröpfchengröße des Reduktionsmittels beim Einspritzen in den Abgasstrom des Verbrennungsmotors verkleinert. Mit deutlich kleineren Tröpfchen des Reduktionsmittels kann die Katalysatorwirkung eines SCR-Katalysators, insbesondere bei relativ niedrigen Abgastemperaturen, insbesondere unterhalb von etwa 200° Celsius, wie sie beispielsweise beim Kaltstart eines Verbrennungsmotors vorherrschen, deutlich verbessert werden, da das eingespritzte Reduktionsmittel aufgrund der kleineren Tröpfchen schneller verdampft.

Insbesondere ist dadurch somit eine Erwärmung des Reduktionsmittels auf ein Temperaturniveau oberhalb der momentanen Abgastemperatur möglich. Dies wird ermöglicht durch das Heizelement, über das Wärmeenergie von außen zugeführt wird. Ferner kann eine Steuerung oder eine Regelung der Heizleistung vorgesehen sein. Hierdurch ist eine Erwärmung des Reduktionsmittels auf ein gewünschtes und/oder vorgebbares Temperaturniveau möglich.

Kern der Erfindung ist somit eine Einspritzdüse zur Einspritzung eines Reduktionsmittels in den Abgasstrom eines Verbrennungsmotors zur selektiven katalytischen Reduktion mit einer integrierten Beheizung zur Erwärmung des durch die Düse geförderten Reduktionsmittels auf ein gewünschtes Temperaturniveau, insbesondere auf eine festlegbare Temperatur.

Insbesondere kann das Heizelement elektrisch betätigt sein.

Insbesondere kann der Außenkörper den Düsenkopf teilweise oder vollständig umhüllen.

Insbesondere kann die Reduktionsmittelkammer mit einem Querschnitt in Form eines Ringspaltes zwischen dem Außenkörper und dem Innenkörper ausgebildet sein.

Insbesondere kann der Außenkörper zumindest einen Hitzeschild aufweisen, der die Reduktionsmittelkammer zumindest teilweise thermisch isoliert

Insbesondere kann der Außenkörper eine Längserstreckung aufweisen. Insbesondere kann der Reduktionsmitteleinlass dabei an der Längserstreckung des Außenkörpers angeordnet sein.

Insbesondere kann der Reduktionsmitteleinlass ein Ventil, insbesondere ein Druckventil und/oder ein Rückschlagventil aufweisen.

Dabei ist die Reduktionsmittelkammer zumindest teilweise mit einem insbesondere katalytischem Wärmeübertragungsmaterial gefüllt. Mit der Formulierung gefüllt ist dabei eine flüssigkeitsdurchlässige und jedenfalls nicht verschließende Füllung der Reduktionsmittelkammer gemeint, sodass das Reduktionsmittel das Wärmeübertragungsmaterial passieren kann. Das Wärmeübertragungsmaterial umhüllt den Innenkörper und leitet die Wärme von dem Mantel des Innenkörpers effizient an das Reduktionsmittel weiter, da das Wärmeübertragungsmaterial über das Kammervolumen verteilt ist und somit eine gleichmäßige Wärmeübertragung vom Innenkörper über das Wärmeübertragungsmaterial hin zum Reduktionsmittel in der Reduktionsmittelkammer ermöglicht.

Insbesondere kann es sich bei dem Wärmeübertragungsmaterial um eine Wolle, insbesondere aus rundem Draht und/oder plattem Draht, und/oder ein Gewebe und/oder ein Gewirr und/oder ein Geflecht und/oder ein Drahtgestrick und/oder ein aufgewickeltes insbesondere gewelltes Metallblech, welches Vorsprünge zur Strömungsoptimierung aufweisen kann, und/oder um offenporigen Schaum und/oder um ein Sintermaterial und/oder um Kugeln und/oder Kristalle handeln. Das heißt bei dem Wärmeübertragungsmaterial kann es sich dabei um eins der genannten Varianten oder um eine Kombination aus mehreren der genannten Varianten handeln.

Dabei kann das Wärmeübertragungsmaterial katalytisch ausgeführt sein. Dadurch werden die einleitend beschriebenen Reaktionen Thermolyse und/oder Hydrolyse des Reduktionsmittels begünstigt und/oder beschleunigt. Insbesondere kann dies durch eine Beschichtung des Wärmeübertragungsmaterials realisiert werden. Insbesondere kann das Wärmeübertragungsmaterial eine titanhaltige Beschichtung aufweisen.

Vorzugsweise ist das Wärmeübertragungsmaterial zumindest teilweise als Metallwolle, insbesondere Stahlwolle, ausgebildet. Insbesondere kann die Stahlwolle einen Feinheitsgrad von Nr. 0000, 000, 00, 0, 1, 2, 3, 4 oder 5 aufweisen. Abhängig vom Feinheitsgrad kann die Wärmeübertragungsrate variiert werden. Eine derartige Wolle verfügt über eine hohe Wärmeleitfähigkeit und Korrosionsbeständigkeit.

Dabei weist das Wärmeübertragungsmaterial zumindest teilweise eine Beschichtung auf. Anders ausgedrückt ist dabei das Wärmeübertragungsmaterial zumindest teilweise, insbesondere vollständig beschichtet. Erfindungsgemäß kann es sich bei der Beschichtung um eine sogenannte Hydrolysebeschichtung handeln. Mit dem Begriff der Hydrolysebeschichtung ist eine Beschichtung gemeint, welche zumindest einen Bestandteil wie beispielsweise TiO₂ aufweist, der eine Hydrolyse des Reduktionsmittels begünstigt. Dadurch kann die Hydrolysetemperatur abgesenkt werden, sodass erhöhte Umsatzraten zu Ammoniak ermöglicht und somit feste Zerfallsproduktmenge verringert werden können.

Zusätzlich oder alternativ weist die Beschichtung einen Bestandteil wie beispielsweise Al₂O₃ und/oder FeCrAl auf, welcher dem Korrosionsschutz dient.

Insbesondere kann es sich bei der Beschichtung um einen sogenannten Washcoat, insbesondere einen Titanoxid-Washcoat handeln. Ein derartiger Washcoat besteht aus porösem Material, wie Aluminiumoxid und dient der Vergrößerung der Oberfläche. Durch die hohe Rauheit wird eine große Oberfläche realisiert. In dem Washcoat können ferner katalytisch aktive Substanzen eingelagert sein.

Insbesondere kann die Beschichtung TiO₂ und/oder Al₂O₃ und/oder einen H-Zeolith, insbesondere H-Mordenit und/oder H-ZSMs, und/oder SiO₂ und/oder ZrO₂ aufweisen. Bei einer kumulativen Verwendung von Al₂O₃ in einer Abmischung der Beschichtung mit TiO₂ und/oder einem H-Zeolith und/oder SiO₂ und/oder ZrO₂ kann das Verhältnis von Al₂O₃ zu den anderen Verbindungen 9:1 bis 1:9, insbesondere 8:2 oder 7:3 oder 6:4 oder 5:5 oder 4:5 oder 3:7 oder 2:8, betragen. Insbesondere kann die Beschichtung insbesondere feinteilige anorganische Oxide, insbesondere Nb₂O₅ und/oder Ta₂O₅ und/oder WOs, und/oder einen Aluminiumsilikat und/oder einen H-Zeolith aufweisen. Insbesondere kann die Beschichtung FeCrAl, insbesondere als Legierung, aufweisen.

Erfindungsgemäß weist das Wärmeübertragungsmaterial zumindest teilweise eine Beschichtung auf, wobei die Beschichtung zumindest einen Hydrolysekatalysator insbesondere TiO₂ und/oder einen Korrosionsschutz insbesondere Al₂O₃ und/oder FeCrAl aufweist.

Bevorzugt ist in der Reduktionsmittelkammer eine insbesondere flüssigkeitsdurchlässige Halterung angeordnet, welche das Wärmeübertragungsmaterial in seiner Position fixiert. Die Halterung kann dabei als offenporige Scheibe, insbesondere aus einem Schaummaterial und/oder einem Geflecht, ausgebildet sein. Die Halterung fixiert das Wärmeübertragungsmaterial in der gewünschten Position und verhindert, dass das Wärmeübertragungsmaterial in eine nicht gewünschte Position gelangt, in der es die Düse verstopfen könnte. Die Halterung kann dabei an einem dem Düsenkopf zugewandten Ende des Innenkörpers angeordnet sein. Anders ausgedrückt kann die Halterung an einem in Strömungsrichtung des Reduktionsmittels befindlichen Ende des Innenkörpers angeordnet sein. Die Halterung kann als Barriere dienen, welche den Durchtritt des Reduktionsmittels erlaubt und gleichzeitig den Durchtritt des Wärmeübertragungsmaterials verhindert.

Vorzugsweise ist das Heizelement oder der Innenkörper selbst als Heizpatrone ausgebildet. Heizpatronen umfassen üblicherweise einen Mantel vorzugsweise aus einem insbesondere zylindrischen Metallkörper, insbesondere aus Edelstahl. Dadurch wird ein hoher Korrosionsschutz gewährleistet. Im Inneren der Heizpatrone befindet sich vorzugsweise eine Heizwendel, die auf einen Kern, insbesondere aus Keramik, aufgewickelt ist. Der Raum zwischen dem Mantel und dem Kern wird vorzugsweise mit Magnesiumoxid befüllt und vorzugsweise anschließend je nach Anspruch an die Heizleistung verdichtet. Derartige Heizpatronen lassen sich auf eine einfache Art und Weise in die Düse montieren und sind chemisch sowie mechanisch robust.

Bevorzugt sind der Außenkörper und der Innenkörper konzentrisch zueinander angeordnet.

Vorzugsweise ist der Außenkörper zylindrisch ausgebildet und/oder der Innenkörper ist zylindrisch ausgebildet.

Bevorzugt ist der Düsenkopf und/oder der Innenkörper stoffschlüssig und/oder kraftschlüssig und/oder formschlüssig mittelbar oder unmittelbar mit dem Außenkörper verbunden. Insbesondere können der Düsenkopf und/oder der Innenkörper reversibel an dem Außenkörper, insbesondere kraftschlüssig und/oder formschlüssig, montiert sein. Auf diese Weise ist der Düsenkopf und/oder der Innenkörper entnehmbar, sodass eine Wartung, insbesondere eine Reinigung der Einspritzdüse während ihrer Lebensdauer ermöglicht wird und/oder einzelne Elemente ausgetauscht werden können. Ferner kann dadurch eine Füllgradvariation des Wärmeübertragungsmaterials erfolgen.

Vorzugsweise weist der Außenkörper an seiner dem Düsenkopf gegenüberliegenden Seite eine Kopfplatte auf, durch welche eine elektrische Anschlussleitung für das Heizelement gelegt ist. Insbesondere kann die Anschlussleitung gegenüber dem Außenkörper abgedichtet sein.

Bevorzugt weist der Düsenkopf zumindest einen Reduktionsmittelaustritt auf, insbesondere wobei der Düsenkopf zu dem Reduktionsmittelaustritt hin konisch verjüngt ausgebildet ist. Insbesondere kann der Düsenkopf mehrere Reduktionsmittelaustritte aufweisen.

Vorzugsweise weist der Außenkörper eine Druckluftkammer und einen in die Druckluftkammer mündenden Drucklufteinlass auf. Insbesondere kann mittels einer derartigen Druckluftkammer ein Hitzeschild ausgebildet werden, der die Reduktionsmittelkammer zumindest teilweise thermisch isoliert. Hierzu kann die Druckluftkammer die Reduktionsmittelkammer zumindest teilweise oder vollständig umhüllen.

Insbesondere kann die Druckluftkammer mittelbar oder unmittelbar in den Reduktionsmittelaustritt des Düsenkopfes münden.

Alternativ oder kumulativ kann der Düsenkopf zumindest einen Druckluftaustritt aufweisen, wobei die Reduktionsmittelkammer mittelbar oder unmittelbar in den Reduktionsmittelaustritt mündet und die Druckluftkammer mittelbar oder unmittelbar in den Druckluftaustritt mündet. Auf diese Weise kann die Düse als außenmischende Zweistoffdüse ausgebildet werden. Insbesondere können dabei der Reduktionsmittelaustritt und der Druckluftaustritt konzentrisch angeordnet sein. Insbesondere kann der Druckluftaustritt den Reduktionsmittelaustritt dabei zumindest teilweise oder vollständig umgeben. Alternativ kann der Reduktionsmittelaustritt den Druckluftaustritt zumindest teilweise oder vollständig umgeben. Bei dieser Art der außenmischenden Zweistoffdüse wird somit das Gemisch aus Harnstofflösung und Druckluft außerhalb der Düse gebildet.

Alternativ oder kumulativ kann eine Gemischbildung innerhalb der Düse erfolgen. Somit kann auch eine innenmischende Düse realisiert werden. Bei einer ersten Ausführungsform einer solchen innenmischenden Düse mündet der Druckluftaustritt in die Reduktionsmittelkammer. Bei einer zweiten Ausführungsform einer solchen innenmischenden Düse mündet der Druckluftaustritt über ein Ventil noch vor der Reduktionsmittelkammer in die Reduktionsmittelleitung

Ferner kann die Düse derart ausgebildet sein, sodass eine Kombination von außerhalb der Düse und innerhalb der Düse erfolgender Gemischaufbereitung erfolgt. Hierzu kann ein Druckluftaustritt über ein Ventil noch vor der Reduktionsmittelkammer in die Reduktionsmittelleitung münden und/oder es kann ein Druckluftaustritt in die Reduktionsmittelkammer münden und ein weiterer Druckluftaustritt kann wie bei der oben dargestellten außenmischenden Düse in einen Druckluftaustritt der Düse münden.

Insbesondere kann/können die Innenwandung des Außenkörpers und/oder die Außenwandung des Innenkörpers mittels einer Beschichtung beschichtet sein. Dabei kann die Innenwandung mit einer Beschichtung und die Außenwandung mit einer anderen oder einer gleichartigen Beschichtung beschichtet sein. Die Beschichtung kann zum Korrosionsschutz und/oder zur Begünstigung der gewünschten Reaktionen des Reduktionsmittels beitragen. Insbesondere kann die Beschichtung Al₂O₃ und/oder einen H-Zeolith, insbesondere H-Mordenit und/oder H-ZSMs, und/oder SiO₂ und/oder ZrO₂ aufweisen. Bei einer kumulativen Verwendung von Al₂O₃ in einer Abmischung der Beschichtung mit einem H-Zeolith und/oder SiO₂ und/oder ZrO₂ kann das Verhältnis von Al₂O₃ zu den anderen Verbindungen 9:1 bis 1:9, insbesondere 8:2 oder 7:3 oder 6:4 oder 5:5 oder 4:5 oder 3:7 oder 2:8, betragen. Insbesondere kann die Beschichtung insbesondere feinteilige anorganische Oxide, insbesondere Nb₂O₅ und/oder Ta₂O₅ und/oder WOs, und/oder einen Aluminiumsilikat und/oder einen H-Zeolith aufweisen. Insbesondere kann die Beschichtung FeCrAl, insbesondere als Legierung, aufweisen. Insbesondere kann es sich bei der Beschichtung um einen sogenannten Titanoxid-Washcoat handeln. Ein derartiger Washcoat besteht aus porösem Material, wie Aluminiumoxid und dient der Vergrößerung der Oberfläche. Durch die hohe Rauheit wird eine große Oberfläche realisiert. In dem Washcoat sind ferner katalytisch aktive Substanzen eingelagert.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird, ist es, dass die zumindest eine Düse durch eine Einspritzdüse nach einem der vorherigen Ansprüche gebildet ist.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Durch die Einspritzdüse mit integriertem Heizelement wird ein kompakter und montagefreundlicher Gesamtaufbau des Reduktionsmitteldosiersystems realisiert.

Die vielfach eingesetzte Reduktionsmittellösung gemäß DIN 70070 gefriert aufgrund ihres Wassergehaltes bei ca. -11° C. Daher ist es vorteilhaft, eine Beheizungseinrichtung beispielsweise innerhalb des Dosiersystems zur Beheizung der Reduktionsmittellösung für den Fall sehr niedriger Umgebungstemperaturen vorzusehen. Eine solche Beheizungseinrichtung kann kumulativ zu dem Heizelement angeordnet sein, insbesondere innerhalb des Tanks.

Vorzugsweise weist das Dosiersystem eine Druckluftversorgung auf und das Reduktionsmittel wird mittels Druckluft, insbesondere außerhalb der Düse, zerstäubt.

Mehrere Ausführungsbeispiele der Erfindung sind in den Figuren dargestellt und werden nachfolgend näher erläutert. Es zeigen:
- Figur 1: eine Schnittdarstellung einer Einspritzdüse nach einem erstem Ausführungsbeispiel;
- Figur 2: eine Schnittdarstellung einer Einspritzdüse nach einem zweitem Ausführungsbeispiel;
- Figur 3: eine schematische Darstellung eines Reduktionsmitteldosiersystems.

Die Figuren sind nicht maßstabsgerecht und lediglich schematisch dargestellt. Identische Bauteile sind mit identischen Bezugszeichen versehen.

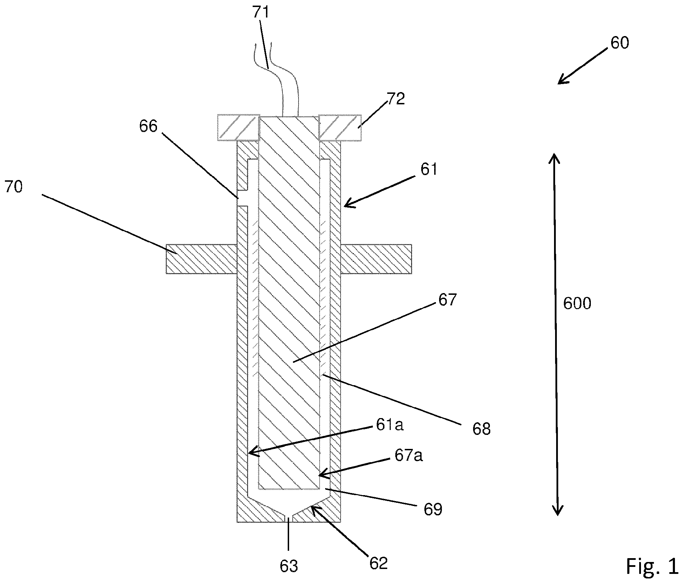

Die Figur 1 zeigt die Einspritzdüse 60 nach dem ersten Ausführungsbeispiel mit einem Außenkörper 61 und einem in dem Außenkörper 61 angeordneten Innenkörper 67. Der Außenkörper 61 weist eine Längserstreckung 600 auf. Der Außenkörper 61 weist an seiner Längserstreckung 600 einen Reduktionsmitteleinlass 66 auf. Zwischen dem Außenkörper 61 und dem Innenkörper 67 ist eine Reduktionsmittelkammer 69 ausgebildet, wobei der Innenkörper 67 als Heizelement in Form einer Heizpatrone ausgebildet ist. Der Innenkörper 67 ist mittels einer Kopfplatte 72 an dem Außenkörper 61 montiert, wobei eine elektrische Anschlussleitung 71 durch die Kopfplatte gelegt ist. Der Außenkörper 61 und der Innenkörper 67 sind beide zylindrisch ausgebildet und konzentrisch zueinander angeordnet. Die Düse 60 wird mittels eines Flansches 70 am Montageort fixiert.

In der Reduktionsmittelkammer 69 liegt ein Wärmeübertragungsmaterial 68 in Form von Stahlwolle ein, welches den Innenkörper 67 umwickelt und zumindest teilweise mit ihm in Kontakt tritt. Das Wärmeübertragungsmaterial 68 ist über die Reduktionsmittelkammer 69 verteilt und leitet die Wärme des Innenkörpers 67 effizient an das über den Reduktionsmitteleinlass 66 in die Reduktionsmittelkammer 69 einströmende Reduktionsmittel weiter. Die Düse 60 weist ferner einen Düsenkopf 62 mit einem Reduktionsmittelaustritt 63 auf, über welchen das Reduktionsmittel mittels der Düse 60 versprüht wird. Der Außenkörper 61 weist eine Innenwandung 61a auf, welche mit einem Korrosionsschutz beschichtet sein kann. Der Innenkörper 67 weist eine Außenwandung 67a auf, welche ebenfalls mit einem Korrosionsschutz beschichtet sein. Alternativ oder kumulativ können in einer weiteren Ausführungsform der Außenkörper 61 und/oder der Innenkörper 67 selbst aus korrosionsbeständigem Material gebildet sein.

Durch die Ausbildung des Innenkörpers 67 als Heizpatrone kann das durch die Düse 60 transportierte Reduktionsmittel gleichzeitig während des Transportes im Inneren der Düse 60 in einem kompakten Aufbau erwärmt werden, wobei dies durch das Wärmeübertragungsmaterial 68 noch effizienter gestaltet wird.

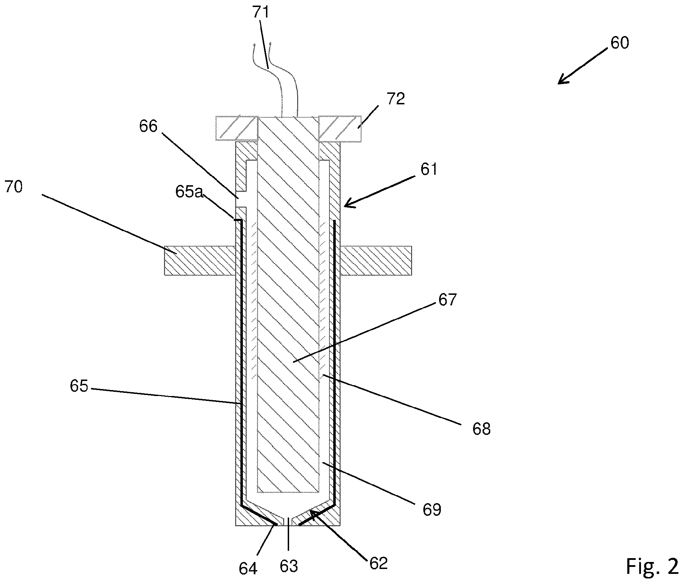

Die Figur 2 zeigt eine Schnittdarstellung einer Einspritzdüse 60 nach einem zweiten Ausführungsbeispiel. Zusätzlich zur Düse gemäß Figur 1 weist die Düse 60 nach dem zweiten Ausführungsbeispiel im Inneren des Außenkörpers 61 eine Druckluftkammer 65 auf. Die Druckluftkammer 65 wird durch einen Drucklufteinlass 65a gespeist und mündet in einem Druckluftaustritt 64 des Düsenkopfs 62. Auf diese Weise wird eine außenmischende Zweistoffdüse ausgebildet, bei der das Reduktionsmittel aus dem Reduktionsmittelaustritt 63 mittels einer aus dem Druckluftaustritt 64 austretenden Druckluft versprüht werden kann. Sofern das Reduktionsmittel in der beheizten Düse 60 nicht über den Siedepunkt hinaus erhitzt und am Düsenaustritt 63 in flüssiger Form vorliegt, kann somit außerhalb der Düse 60 eine Zerstäubung des Reduktionsmittels mittels der Druckluft erfolgen, um die gewünschte Tröpfchengröße innerhalb des hierdurch gebildeten Aerosols zu gewährleisten.

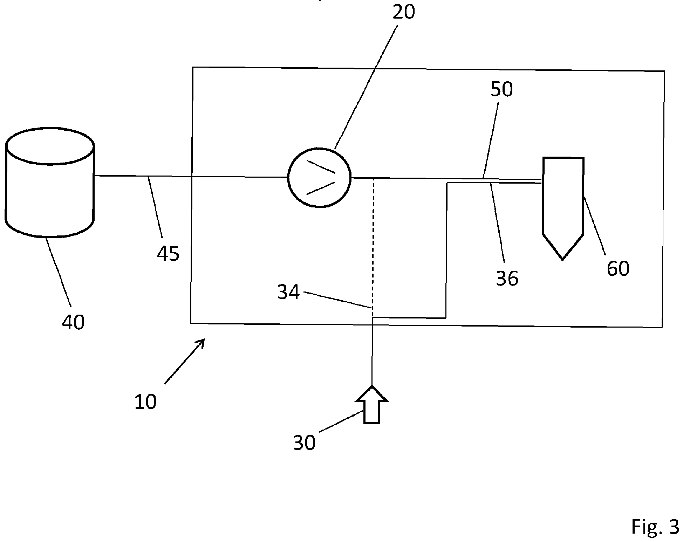

Die Figur 3 zeigt eine schematische Darstellung eines Reduktionsmitteldosiersystems 10 zur Einspritzung eines Reduktionsmittels in den Abgasstrom eines nicht dargestellten Verbrennungsmotors zur selektiven katalytischen Reduktion. Mittels einer Förderpumpe 20 wird über eine Saugleitung 45 ein Reduktionsmittel aus einem Reduktionsmitteltank 40 angesaugt und über eine Druckleitung 50 zu der Einspritzdüse 60 gefördert. Über die Einspritzdüse 60 wird das Reduktionsmittel in den Abgasstrom des Verbrennungsmotors eingeleitet.

Ferner umfasst das Dosiersystem 10 eine Druckluftversorgung 30, insbesondere mit Druckluftregelventil, die eine erste Druckluftleitung 36 zur Aerosolbildung und eine zweite Druckluftleitung 34 zur Reinigung Reduktionsmittel führender Leitungen und Elemente aufweist. In dem Fall, dass es sich um eine innenmischende Düse handelt, dient die zweite Druckluftleitung 34 nicht nur zur Reinigung Reduktionsmittel führender Leitungen und Elemente, sondern ferner der Druckluftzufuhr für die Gemischaufbereitung innerhalb der innenmischenden Düse.

Die erste Druckluftleitung 36 ist direkt mit der Düse 60 verbunden. Die zweite Druckluftleitung 34 ist mit der Druckleitung 50 stromab der Förderpumpe 20 verbunden. Die Druckluftversorgung 30 liefert Druckluft, die zum einen über die erste Druckluftleitung 36 zur Aerosolbildung bzw. zur Zerstäubung des Reduktionsmittels außerhalb der Düse 60 und zum anderen zur Reinigung Reduktionsmittel führender Leitungen und Elemente nach Beendigung der Dosierung bereitgestellt wird. Nach Abschalten des Dosiersystems 10 wird Druckluft in die zweite Druckluftleitung 34 geleitet, um das sich in der Druckleitung 50 befindliche Reduktionsmittel auszublasen. Alternativ kann eine innenmischende Düse realisiert werden, die auch während des Dosierbetriebs mit Druckluft arbeitet.

Durch eine zuvor beschriebene Einspritzdüse 60 nach erstem oder zweitem Ausführungsbeispiel kann die Leistung eines SCR-Katalysators durch bereits erhitztes oder verdampftes Reduktionsmittel verbessert werden, wobei eine solche Düse ferner zu einem kompakten und montagefreundlichen Aufbau des Reduktionsmitteldosiersystems 10 beiträgt.

## Patentansprüche

1. Einspritzdüse (60) zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse (60) einen Außenkörper (61), einen in dem Außenkörper (61) angeordneten Innenkörper (67) und einen Düsenkopf (62) umfasst, wobei der Außenkörper (61) einen Reduktionsmitteleinlass (66) aufweist, wobei zwischen dem Außenkörper (61) und dem Innenkörper (67) eine Reduktionsmittelkammer (69) ausgebildet ist, wobei der Innenkörper (67) zumindest ein Heizelement aufweist oder als Heizelement ausgebildet ist, **dadurch gekennzeichnet, dass** die Reduktionsmittelkammer (69) zumindest teilweise mit einem Wärmeübertragungsmaterial (68) gefüllt ist und das Wärmeübertragungsmaterial (68) zumindest teilweise eine Beschichtung aufweist, wobei die Beschichtung zumindest einen Hydrolysekatalysator, insbesondere TiO₂, und/oder einen Korrosionsschutz, insbesondere Al₂O₃ und/oder FeCrAl, aufweist.

2. Einspritzdüse nach Anspruch 1, **dadurch gekennzeichnet, dass** es sich bei dem Wärmeübertragungsmaterial (68) um katalytisches Wärmeübertragungsmaterial (68) handelt.

3. Einspritzdüse nach Anspruch 1 oder 2, **dadurch gekennzeichnet, dass** das Wärmeübertragungsmaterial (68) zumindest teilweise als poröser Schaum und/oder als Metallwolle, insbesondere Stahlwolle, ausgebildet ist.

4. Einspritzdüse nach einem der vorherigen Ansprüche, **dadurch gekennzeichnet, dass** die Reduktionsmittelkammer (69) zumindest teilweise mit einem insbesondere katalytischem Wärmeübertragungsmaterial (68) gefüllt ist, wobei in der Reduktionsmittelkammer (69) eine insbesondere flüssigkeitsdurchlässige Halterung angeordnet ist, welche das Wärmeübertragungsmaterial (68) in seiner Position fixiert.

5. Einspritzdüse nach einem der vorherigen Ansprüche, **dadurch gekennzeichnet, dass** das Heizelement oder der Innenkörper (67) selbst als Heizpatrone ausgebildet ist.

6. Einspritzdüse nach einem der vorherigen Ansprüche, **dadurch gekennzeichnet, dass** der Außenkörper (61) und der Innenkörper (67) konzentrisch zueinander angeordnet sind.

7. Einspritzdüse nach einem der vorherigen Ansprüche, **dadurch gekennzeichnet, dass** der Außenkörper (61) zylindrisch ausgebildet ist und/oder der Innenkörper (67) zylindrisch ausgebildet ist.

8. Einspritzdüse nach einem der vorherigen Ansprüche, **dadurch gekennzeichnet, dass** der Düsenkopf (62) und/oder der Innenkörper (67) stoffschlüssig und/oder kraftschlüssig und/oder formschlüssig mittelbar oder unmittelbar mit dem Außenkörper (61) verbunden ist.

9. Einspritzdüse nach einem der vorherigen Ansprüche, **dadurch gekennzeichnet, dass** der Außenkörper (61) an seiner dem Düsenkopf (62) gegenüberliegenden Seite eine Kopfplatte (72) aufweist, durch welche eine elektrische Anschlussleitung (71) für das Heizelement gelegt ist.

10. Einspritzdüse nach einem der vorherigen Ansprüche, **dadurch gekennzeichnet, dass** der Düsenkopf (62) zumindest einen Reduktionsmittelaustritt (63) aufweist, insbesondere dass der Düsenkopf (62) zu dem Reduktionsmittelaustritt (63) hin konisch verjüngt ausgebildet ist.

11. Einspritzdüse nach einem der vorherigen Ansprüche, **dadurch gekennzeichnet, dass** der Außenkörper (61) eine Druckluftkammer (65) und einen in die Druckluftkammer (65) mündenden Drucklufteinlass (65a) aufweist.

12. Reduktionsmitteldosiersystem (10) zur Einspritzung eines Reduktionsmittels in den Abgasstrom eines Verbrennungsmotors zur selektiven katalytischen Reduktion, mit zumindest einer Förderpumpe (20), mittels derer Reduktionsmittel aus einem Reduktionsmitteltank (40) über eine Saugleitung (45) aus dem Tank (40) angesaugt, über zumindest eine Druckleitung (50) gefördert und über zumindest eine Düse (60) in den Abgasstrom des Verbrennungsmotors eingeleitet wird, **dadurch gekennzeichnet, dass** die zumindest eine Düse durch eine Einspritzdüse (60) nach einem der vorherigen Ansprüche gebildet ist.

13. Reduktionsmitteldosiersystem nach Anspruch 12, **dadurch gekennzeichnet, dass** das Dosiersystem (10) eine Druckluftversorgung (30) aufweist und das Reduktionsmittel mittels Druckluft, insbesondere außerhalb der Einspritzdüse (60), zerstäubt wird.

## Claims

1. Injection nozzle (60) for injecting a reducing agent into the exhaust gas flow of an internal combustion engine for selective catalytic reduction, in particular for the pulverization of the reducing agent by means of compressed air or propellant, wherein the injection nozzle (60) comprises an outer body (61), an inner body (67) arranged in the outer body (61) and a nozzle head (62), wherein the outer body (61) has a reducing agent inlet (66), wherein between the outer body (61) and the inner body (67) a reducing agent chamber (69) is formed, wherein the inner body (67) has at least one heating element or is in the form of a heating element, **characterized in that** the reducing agent chamber (69) is filled at least partially with a heat transfer material (68) and the heat transfer material (68) has at least partially a coating, wherein the coating has at least one hydrolysis catalyst, in particular TiO₂, and/or a protection against corrosion, in particular Al₂O₃ and/or FeCrAl.

2. Injection nozzle according to claim 1, **characterized in that** the heat transfer material (68) is a catalytic heat transfer material (68).

3. Injection nozzle according to claim 1 or 2, **characterized in that** the heat transfer material (68) is formed at least partially as a porous foam an/or as metal wool, in particular steel wool.

4. Injection nozzle according to any of the preceding claims, **characterized in that** the reducing agent chamber (69) is filled at least partially with an, in particular catalytic, heat transfer material (68), wherein in the reducing agent chamber (69) is arranged an in particular liquid-permeable holder which fixes the heat transfer material (68) in its position.

5. Injection nozzle according to any of the preceding claims, **characterized in that** the heating element or the inner body (67) is itself in the form of a heating cartridge.

6. Injection nozzle according to any of the preceding claims, **characterized in that** the outer body (61) and the inner body (67) are arranged concentrically to one another.

7. Injection nozzle according to any of the preceding claims, **characterized in that** the outer body (61) is cylindrical in form and/or the inner body (67) is cylindrical in form.

8. Injection nozzle according to any of the preceding claims, **characterized in that** the nozzle head (62) and/or the inner body (67) is connected in a material-fitting and/or force-fitting and/or form-fitting manner indirectly or directly with the outer body (61).

9. Injection nozzle according to any of the preceding claims, **characterized in that** the outer body (61) has on its side opposite to the nozzle head (62) a head plate (72) through which an electrical connecting line (71) for the heating element is laid.

10. Injection nozzle according to any of the preceding claims, **characterized in that** the nozzle head (62) has at least one reducing agent outlet (63), in particular that the nozzle head (62) is shaped so as to taper in a conical manner towards the reducing agent outlet (63).

11. Injection nozzle according to any of the preceding claims, **characterized in that** the outer body (61) has a compressed air chamber (65) and a compressed air inlet (65a) opening into the compressed air chamber (65).

12. Reducing agent metering system (10) for injecting a reducing agent into the exhaust gas flow of an internal combustion engine for selective catalytic reduction, having at least one conveying pump (20) by means of which reduction agent is suctioned out of a reduction agent tank (40) via an extraction line (45) out of the tank (40), is conveyed by way of at least one pressure line (50) and is introduced via at least one nozzle (60) into the exhaust gas flow of the internal combustion engine, **characterized in that** the at least one nozzle is formed by an injection nozzle (60) according to any of the preceding claims.

13. Reducing agent metering system according to claim 12, **characterized in that** the metering system (10) has a compressed air supply (30) and the reducing agent is pulverized by means of compressed air, in particular externally to the injection nozzle (60).

## Revendications

1. Buse d'injection (60) pour l'injection d'un agent de réduction dans le courant de gaz d'échappement d'un moteur à combustion destiné à la réduction catalytique sélective, en particulier pour la pulvérisation de l'agent de réduction au moyen d'air comprimé ou de gaz propulseur, dans laquelle la buse d'injection (60) comprend un corps extérieur (61), un corps intérieur (67) agencé dans le corps extérieur (61) et une tête de buse (62), dans laquelle le corps extérieur (61) présente une entrée d'agent de réduction (66), dans laquelle une chambre d'agent de réduction (69) est réalisée entre le corps extérieur (61) et le corps intérieur (67), dans laquelle le corps intérieur (67) présente au moins un élément chauffant ou est réalisé comme élément chauffant, **caractérisée en ce que** la chambre d'agent de réduction (69) est remplie au moins partiellement d'un matériau de transfert de chaleur (68) et le matériau de transfert de chaleur (68) présente au moins partiellement un revêtement, dans laquelle le revêtement présente au moins un catalyseur d'hydrolyse, en particulier TiO₂, et/ou une protection contre la corrosion, en particulier Al₂O₃ et/ou FeCrAI.

2. Buse d'injection selon la revendication 1, **caractérisée en ce que** le matériau de transfert de chaleur (68) d'un matériau de transfert de chaleur (68) catalytique.

3. Buse d'injection selon la revendication 1 ou 2, **caractérisée en ce que** le matériau de transfert de chaleur (68) est réalisé au moins partiellement comme mousse poreuse et/ou comme laine métallique, en particulier laine d'acier.

4. Buse d'injection selon l'une quelconque des revendications précédentes, **caractérisée en ce que** la chambre d'agent de réduction (69) est remplie au moins partiellement d'un matériau de transfert de chaleur (68) en particulier catalytique, dans laquelle un support perméable au liquide en particulier est agencé dans la chambre d'agent de réduction (69), support qui fixe le matériau de transfert de chaleur (68) dans sa position.

5. Buse d'injection selon l'une quelconque des revendications précédentes, **caractérisée en ce que** l'élément chauffant ou le corps intérieur (67) même est réalisé comme cartouche chauffante.

6. Buse d'injection selon l'une quelconque des revendications précédentes, **caractérisée en ce que** le corps extérieur (61) et le corps intérieur (67) sont agencés de manière concentrique l'un par rapport à l'autre.

7. Buse d'injection selon l'une quelconque des revendications précédentes, **caractérisée en ce que** le corps extérieur (61) est réalisé de manière cylindrique et/ou le corps intérieur (67) est réalisé de manière cylindrique.

8. Buse d'injection selon l'une quelconque des revendications précédentes, **caractérisée en ce que** la tête de buse (62) et/ou le corps intérieur (67) est relié par complémentarité de matière et/ou à force et/ou par complémentarité de formes directement ou indirectement au corps extérieur (61).

9. Buse d'injection selon l'une quelconque des revendications précédentes, **caractérisée en ce que** le corps extérieur (61) présente au niveau de son côté opposé à la tête de buse (62), une plaque de tête (72) par laquelle une conduite de raccordement (71) électrique est conçue pour l'élément chauffant.

10. Buse d'injection selon l'une quelconque des revendications précédentes, **caractérisée en ce que** la tête de buse (62) présente au moins une sortie d'agent de réduction (63), en particulier **en ce que** la tête de buse (62) est réalisée en se rétrécissant à la manière d'un cône vers la sortie d'agent de réduction (63).

11. Buse d'injection selon l'une quelconque des revendications précédentes, **caractérisée en ce que** le corps extérieur (61) présente une chambre à air comprimé (65) et une entrée d'air comprimé (65a) débouchant dans la chambre à air comprimé (65).

12. Système de dosage d'agent de réduction (10) destiné à l'injection d'un agent de réduction dans le courant de gaz d'échappement d'un moteur à combustion interne destiné à la réduction catalytique sélective, avec au moins une pompe de refoulement (20), au moyen de laquelle un agent de réduction issu d'un réservoir d'agent de réduction (40) est aspiré du réservoir (40) via une conduite d'aspiration (45), est refoulé via au moins une conduite de pression (50) et est introduit via au moins une buse (60) dans le courant de gaz d'échappement du moteur à combustion, **caractérisé en ce que** l'au moins une buse est formée par une buse d'injection (60) selon l'une quelconque des revendications précédentes.

13. Système de dosage d'agent de réduction selon la revendication 12, **caractérisé en ce que** le système de dosage (10) présente une alimentation en air comprimé (30) et l'agent de réduction est pulvérisé au moyen d'air comprimé, en particulier en dehors de la buse d'injection (60).
